# EUROPEAN PATENT SPECIFICATION

(11) **EP 3 898 030 B1**
(45) Date of publication and mention of the grant of the patent: **09.08.2023**
(21) Application number: 19820778.9
(22) Date of filing: 17.12.2019
(51) Int. Cl.: B22D 41/24

(54) **ROBOTIZED SYSTEM FOR CHANGING A SLIDING GATE VALVE PLATE**
ROBOTERSYSTEM ZUM WECHSELN EINER GLEITSCHIEBERVENTILPLATTE
SYSTÈME ROBOTISÉ POUR LE CHANGEMENT DE PLAQUE D'UN TIRROIR

(30) Priority: 18.12.2018 EP 18213329
(43) Date of publication of application: 27.10.2021
(73) Proprietor: Vesuvius Group S.A, 7011 Ghlin (BE)
(72) Inventor: CAROSIELLI, David, 7160 Chapelle-Lez-Herlaimont (BE); LAMBLOTTE, Arnaud, 7100 Haine-Saint-Pierre (BE)
(74) Representative: Brohez, Véronique
(86) International application number: PCT/EP2019/085618
(87) International publication number: WO 2020/127241

(56) References cited:
- DE-A1-102009 050 216
- JP-A- H0 466 268
- JP-A- H0 760 434
- JP-A- H0 819 853
- US-A- 5 645 793
- US-A1- 2010 017 027

## Description

### FIELD OF THE INVENTION

The present invention relates to a robotized system for changing a sliding gate valve plate in a sliding gate valve in a metallurgic casting installation. The present invention proposes a robotized system which can be fully automated, capable of removing a spent sliding gate valve plate from its casting position in a plate support frame coupled to a metallurgic vessel, storing it for refurbishing or for disposal, and taking a new sliding gate valve plate and loading it into its casting position in the plate support frame.

### BACKGROUND OF THE INVENTION

Sliding gate valves have been known since 1883. Sliding gate valves are used to control the flow of molten metal poured from an upstream metallurgic vessel to a downstream vessel. For example, from a furnace to a ladle, from a ladle to a tundish or from a tundish into an ingot mould. For example, US-A-0311902 or US-A-0506328 disclose sliding gate valves arranged at the bottom of a casting ladle wherein pairs of refractory sliding gate valve plates provided with a through bore are slid one with respect to the other. When the pouring orifices are in register or partially overlap, molten metal can flow through the sliding gate valve while when there is no overlap between the pouring orifices, the molten metal flow is totally stopped. Partial overlap of the pouring orifices allows the regulation of the molten metal flow by throttling the molten metal stream. Although sliding gate valves have evolved considerably in the last decades, the principle remains the same, with one plate sliding relative to another to control the level of overlap between the through bores of the two plates.

Sliding gate valve plates are operated under severe conditions when mounted in a sliding gate valve and wear off with time, so that they must be replaced at regular intervals. Tube changing systems for changing a pouring nozzle from a sliding gate valve of a tundish have been proposed in the art, such as e.g., in EP2547474. In many cases, however, the metallurgic vessel is emptied from its content, moved away from the casting installation and checked for signs of excessive wear and refurbished, including changing the sliding gate valve plates. To date, this operation is made mostly manually by human operators. This is hard labour: handling heavyweights under time pressure, at high temperatures and requiring strength to disrupt any adhesion between mortar and a sliding gate valve plate to be changed. Human errors can be made under such stressful conditions. There is a demand from the industry to develop automated systems for changing sliding gate valve plates using robots instead of human operators.

Configuring a robot for changing a sliding gate valve plate, however, faces many challenges. The sliding gate valve plates are quite heavy to handle, and they must be positioned with much accuracy into corresponding receiving cradles provided in the plate support frame. The position of the metallurgic vessel changes from one operation to the other and the robot must adapt to the different positions of each new metallurgic vessel brought for refurbishing. Spent sliding gate valve plates are hot, whilst new sliding gate valve plates are cold, thus changing the dimensions of the plates. Often fumes and vapours obscure visibility. A top sliding gate valve plate is coupled to an inner nozzle with mortar, which must be broken before removing the top sliding gate valve plate. To the applicant's best knowledge, no satisfactory robotized system for changing sliding gate valve plates has been successfully implemented in a metallurgic installation.

US20100017027 describes an arrangement for the maintenance of a sliding gate valve mounted on the spout of a container for molten metal. The arrangement comprises at least one tool magazine, means for opening and closing the sliding gate valve, and a robot comprising an automatic grip changing system, the robot being able to automatically detect the exact position of the container or of the sliding gate valve. This document, however, does not give any details on the automatic grip changing system.

JP H07 60434 discloses an apparatus for replacing the nozzle and plates of metallurgical vessel. In the system described, the plates are handled by their through bores, which can consequently be damaged during the operation.

DE 10 2009 050216 discloses a method and apparatus for exchanging the slide closure of a metallurgical vessel, wherein the sliding closure is gripped by an industrial robot. This document, however, does not give any details on the gripping system.

US 5 645 793 discloses a system for exchanging a whole slide gate valve of a metallurgical vessel but does not disclose a system for replacing individual slide gate valve plates.

JP H08 19853 also discloses a system for exchanging a whole slide gate valve of a metallurgical vessel. Once again a system for replacing individual slide gate valve plates is not disclosed.

JP H04 66268 also discloses a system for exchanging a whole slide gate valve of a metallurgical vessel. Once again a system for replacing individual slide gate valve plates is not disclosed.

The aim of the present invention is to meet the foregoing challenges by providing a novel robotized system for changing sliding gate valve plates, combining the efficacy and reproducibility of a robot with the flexibility required to adapt to changing conditions (temperature, dimensions, relative positions, fumes, etc.). This and other advantages of the present invention are explained more in detail in the following sections.

### SUMMARY OF THE INVENTION

The objectives of the present invention have been reached with a robotized system for fixing or removing a sliding gate valve plate to or from a sliding gate valve, comprising:
(a) a sliding gate valve plate comprising a sliding surface separated from a second surface by a thickness of the sliding gate valve plate and joined to one another by a peripheral edge, and comprising a through bore extending normal to the sliding surface, wherein the sliding gate valve plate is selected among,
   - a top sliding gate valve plate,
   - a bottom sliding gate valve plate, and
   - optionally a mid-sliding gate valve plate wherein the second surface is a second sliding surface,
(b) a metallurgic vessel provided with a sliding gate valve comprising a support structure comprising a plate support frame comprising a receiving cradle suitable for receiving and locking the sliding gate valve plate, including,
   - a fixed top plate support frame for receiving and locking the top sliding gate valve plate,
   - a bottom plate support frame (11L) for receiving and locking the bottom sliding gate valve plate, and
   - optionally a mid-plate support frame (11m) for receiving and locking the mid-sliding gate valve plate, sandwiched between the top and bottom sliding gate valve plates,
   Wherein
   ∘ the bottom plate support frame is a movable carriage suitable for sliding the sliding surface of the bottom sliding gate valve plate against and relative to the sliding surface of the top sliding gate valve plate, thus forming a two-plate sliding gate, or
   ∘ optionally, the mid-plate support frame is a movable carriage suitable for sliding the sliding surface and the second sliding surface of the mid-sliding gate valve plate against and relative to the sliding surfaces of the top and bottom sliding gate valve plates, respectively, thus forming a three-plate sliding gate,
   for bringing into and out of registry the through bores of the top and bottom sliding gate valve plates and optionally the mid-sliding gate valve plate,
(c) a robot comprising a handling interface provided with gripping clamps for gripping the sliding gate valve plate, and configured for,
   - collecting a new unit of the sliding gate valve plate and coupling and locking it to the corresponding plate support frame, and/or
   - unlocking and removing a spent unit of the sliding gate valve plate from the corresponding plate support frame,
   wherein,
(d) the gripping clamps can be moved from an open position suitable for surrounding the peripheral edge of the sliding gate valve plate to a gripping position suitable for coupling the gripping clamps to gripping holds located at the peripheral edge and / or at the second surface, adjacent to the peripheral edge, of the sliding gate valve plate, such that the robot can securely hold and handle the sliding gate valve plate, and
(e) the receiving cradle of the plate support frame comprises clearings allowing access of the gripping clamps to the gripping holds when the sliding gate valve plate is locked in the receiving plate support frame.

The sliding gate valve plate can be a top or a bottom sliding gate valve plate, wherein the second surface has an area smaller than the sliding surface. In a projection onto the sliding surface, the second surface is enclosed within the sliding surface, and the peripheral edge and /or the second surface comprises bevelled portions forming the gripping holds.

Alternatively, the gripping holds can be protrusions protruding out of the peripheral edge and are preferably part of a metal can cladding a portion of the peripheral edge. The gripping holds can also be recesses opening at the peripheral edge and penetrating in the thickness of the slide gate plate. The recesses are preferably at least partly formed in a metal can cladding a portion of the peripheral edge. A sliding gate valve plate can comprise a combination of gripping holds formed by bevelled portions, protrusions and / or recesses.

Alternatively, the gripping holds can be portions of the second surface adjacent to the peripheral edge, and the clearings are then sufficiently deep to allow the gripping clamps to reach a position facing said portions of the second surface when the sliding gate valve plate is locked in the receiving plate support frame, so that the gripping clamps can move to the gripping position, engaging the second surface.

In a preferred embodiment, the handling interface of the robot comprises N = 3 or 4 gripping clamps, which are L-shaped with a free end and a coupled end movably mounted so as to move the free end from the open position to the gripping position suitable for coupling the free end of the L-shaped gripping clamps to the gripping holds of the sliding gate valve plate. The L-shaped gripping clamps can be rotatably mounted so as to rotate between the open and gripping positions about a rotation axis,
- intersecting the coupled end normal to both free end and coupled end, forming a rocking clamp (25r), or
- coaxial with the coupled end forming a gyrating clamp (25g),
wherein a number, n, of L-shaped gripping clamps are rotatable about one of the foregoing rotation axes and the remaining (N - n) L-shaped gripping clamps are rotatable about the other of the foregoing rotation axes, with n = 1 to 4, preferably N = 4 and n = 2. The rocking clamps can rotate about a single axis or can rotate about two axes parallel to one another.

For example, the handling interface of the robot comprises one or two adjacent rocking clamps and comprises one or two adjacent gyrating clamps. In a preferred embodiment, the handling interface or the top plate support frame comprises a protrusion such that when the robot faces the top plate support frame to remove the top sliding gate valve plate therefrom, with the one or two gyrating clamps in gripping position, the robot is at an angle with respect to the sliding surface such that the one or two rocking clamps can rotate and contact the gripping holds, but cannot reach the gripping position without pulling one end of the top sliding gate valve plate which rotates about an axis passing by the one or two gyrating clamps and easily breaking mortar adhering it to the metallurgic vessel.

The handling interface of the robot preferably further comprises resilient elements suitable for pressing against the sliding surface when the free ends of the L-shaped gripping clamps are in the gripping position and thus locking the sliding gate valve plate to the handling interface of the robot.

In a preferred embodiment, the handling interface of the robot comprises guiding pins protruding beyond a plane comprising the sliding surface when a sliding gate valve plate is gripped. The plate support frame comprises funnel shaped cavities for receiving the guiding pins and guiding the sliding gate valve plate in alignment with the receiving cradle.

The handling interface is preferably coupled to an arm of the robot by means of a coupling element comprising pneumatic or hydraulic system capable of controlling the compliance of the coupling element and thus the compliance of the coupling of the handling interface to the robot.

The present invention also concerns a method for fixing a sliding gate valve plate to a plate support structure of a slide gate valve mounted at a bottom of a metallurgic vessel, comprising,
(a) providing a robotized system as defined supra,
(b) approaching the handling interface of a new unit of a slide gate valve plate,
(c) engaging the gripping clamps, advantageously by translation and/or rotation, in the gripping holds of the new unit thus reaching their gripping position, such that the robot securely holds and can handle the new unit,
(d) driving the handling interface with the new unit to the plate support frame, with the gripping clamps engaged in the corresponding clearings,
(e) disengaging the gripping clamps, advantageously by translation and/or rotation, from the gripping holds,
(f) driving the handling interface away from the plate support frame.

The present invention also concerns a method for removing a top sliding gate valve plate from a plate support structure of a slide gate valve mounted at a bottom of a metallurgic vessel, comprising,
(a) providing a robotized system as defined supra wherein the handling interface or the top plate support frame comprises a protrusion, and wherein a top sliding gate valve plate is loaded in a top plate support frame and coupled to an inner nozzle with mortar.
(b) engaging the gyrating clamps entirely into the corresponding clearings and rotating the gyrating clamps to engage into the corresponding gripping holds thus reaching their gripping position,
(c) engaging the rocking clamps into the corresponding clearings as far as the protrusion allows, and rotating the rocking clamps towards their gripping position to partially engage the rocking clamps into the corresponding gripping holds, thereby pulling one end of the top sliding gate valve plate away from the inner nozzle, and initiating a crack in the mortar until the rocking clamps are entirely engaged into the corresponding gripping holds, and reach their gripping position,
(d) removing the top sliding gate valve plate from the top plate support frame by driving the handling interface away from the top plate support frame.

### BRIEF DESCRIPTION OF THE FIGURES

On these figures,
**Fig. 1** depicts various steps for changing sliding gate valve plates in a metallurgic vessel with a robot according to the present invention.
**Fig. 2** shows (a) a two-plate and (b) a three-plate sliding gate.
**Fig. 3** shows perspective cross-cut view of a sliding gate valve plate and of a plate support frame (a) before coupling and (b) after coupling.
**Fig.4** shows a side view and top view of a sliding gate valve plate and of a handling interface of a robot (a) before coupling and (b) after coupling.;
**FIG.5** shows various steps according to a first implementation for coupling a sliding gate valve plate to a plate support frame using a pneumatic or hydraulic coupling element.
**FIG.6** shows top views and cross-sectional views of a sliding gate valve plate comprising gripping holds (a) in the form of portions of the second surface (i) or recesses (ii-iv) and (b) in the form of protrusions.
**FIG.7** shows various steps for ripping the mortar coupling a top slide gate valve plate to an inner nozzle of a metallurgic vessel, as the top sliding gate valve plate is being removed from its receiving cradle.
**FIG.8** shows an embodiment of handling interface according to the present invention (a) general perspective view, (b) detail on dual axes-rocking clamps, and (c)-(e) show single and dual axes rocking clamps.
**FIG.9** shows various steps according to a second implementation for coupling a slide gate valve plate to a plate support frame using a pneumatic or hydraulic coupling element.

### DETAILED DESCRIPTION.

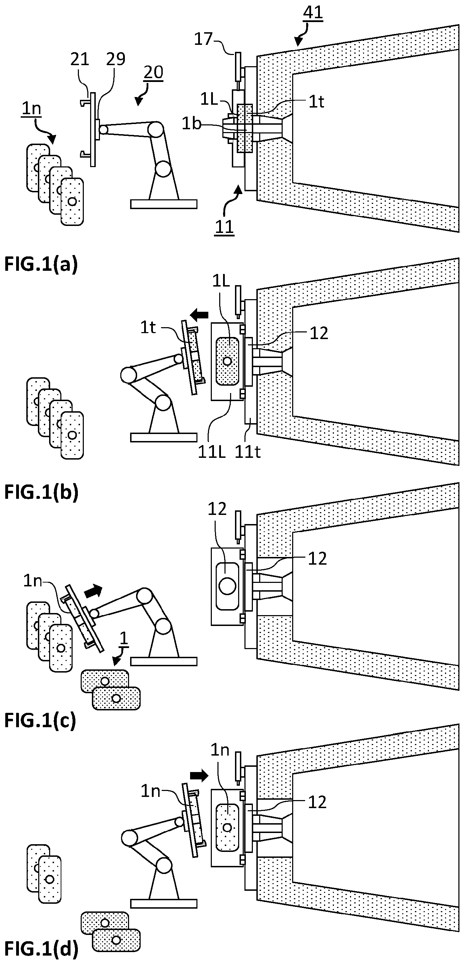

Figures 1(a) shows a metallurgic vessel (41) such as a tundish or a ladle lying on its side in a workshop where it is checked for worn elements and for refurbishing. The metallurgic vessel comprises a slide gate valve exposed vertically for changing sliding gate valve plates (1t, 1L) which are worn and replacing them with new sliding gate valve plates (1n) stored in an appropriate place, ready for use. When this operation is generally performed by a human operator, the present invention proposes a solution for the whole operation of removing a spent sliding gate valve plate and replacing it by a new one to be performed by a robot (20). A robotized system according to the present invention for fixing or removing a sliding gate valve plate to or from a sliding gate valve, comprises a sliding gate valve plate (1), a metallurgic vessel (41) provided with a sliding gate valve, and a robot (20). The robot comprises a handling interface (21) for gripping and manipulating the sliding gate valve plate.

As shown in Figure 1(a)&(b), when a metallurgic vessel (41) is brought to a workshop, it can be laid on its side to expose the sliding gate valve. The sliding gate valve is opened by the robot by rotation about hinges of the bottom plate support frame (11L) relative to the top plate support frame (11t). The robot (20) removes the sliding gate valve plates (1t, 1L) from their respective plate support frames (11t, 11L) and stores them for repair or for disposal (cf. Figure 1(c)). As shown in Figure 1(c)&(d), the robot takes new sliding gate valve plates (1n) which were stored for use and couples them to the receiving cradles (12) of the corresponding plate support frames (11t, 11L). The bottom plate support frame (11L) can be closed to bring the sliding surfaces (1s) of the top and bottom sliding gate valve plates (1t, 1L) in sliding contact with one another (cf. Figure 1(a), but with new sliding gate valve plates). The features making all the foregoing operations possible proposed in the present invention are described more in detail in continuation.

### Sliding gate valve and sliding gate valve plates

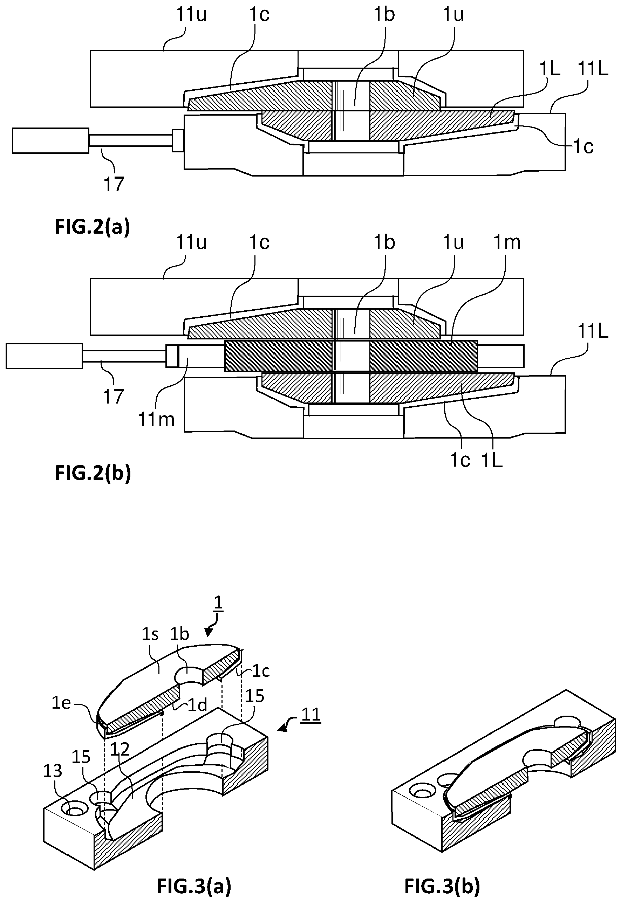

The sliding gate valve can be a two-plate or a three-plate sliding gate valve. As illustrated in Figure 2(a) a two-plate sliding gate valve comprises a top sliding gate valve plate (1t) and a bottom sliding gate valve plate (1L), whilst a three-plate sliding gate as illustrated in Figure 2(b) further comprises a mid-sliding gate valve plate (1m) sandwiched between a top and a bottom sliding gate valve plate (1t, 1L).

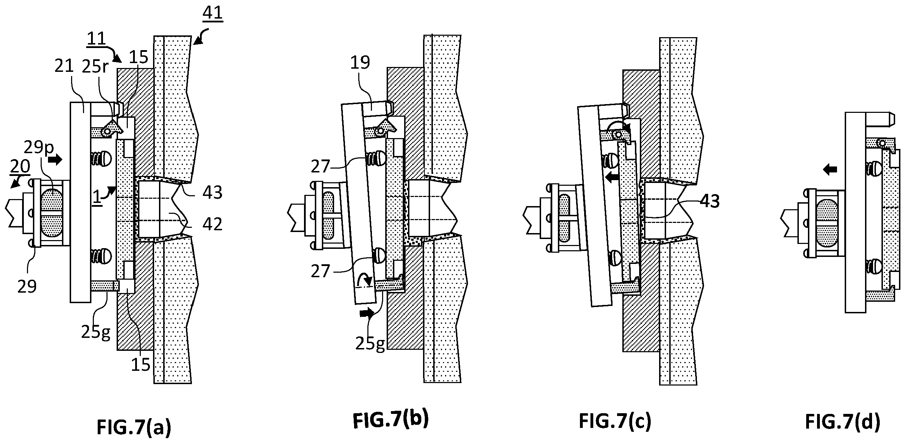

A sliding gate valve plate (1) comprises a sliding surface (1s) separated from a second surface (1d) by a thickness of the sliding gate valve plate and joined to one another by a peripheral edge (1e). It also comprises a through bore (1b) extending normal to the sliding surface. The second surface (1d) of a mid-sliding gate valve plate is also a sliding surface. The top, bottom, and optionally the mid- sliding gate valve plates are each coupled to a receiving cradle (12) of a corresponding top, bottom, and optionally mid-plate support frame (11t, 11L, 11m), with at least one sliding surface (1s) of one plate in sliding contact with a sliding surface (1s) of a second plate. The top plate support frame is fixed relative to the metallurgic vessel, because the top sliding gate valve plate (1t) is generally coupled to an inner nozzle (42) of the metallurgic vessel (41) with mortar (43) as illustrated in Figure 7. In a two-plate sliding gate valve (cf. Figure 2(a)) the bottom plate support frame (11L) is a movable carriage which can translate driven by a pneumatic or hydraulic piston (17) such that the sliding surface of the bottom sliding gate valve plate slides in contact against and relative to the sliding surface of the top sliding gate valve plate. In a three-plate sliding gate valve, the bottom plate support frame (11L) is fixed relative to the top plate support frame and to the metallurgic vessel. The mid-plate support frame is a movable carriage suitable for sliding the sliding surface (1s) and the second sliding surface (1d) (which is also a sliding surface) of the mid-sliding gate valve plate against and relative to the sliding surfaces of the top and bottom sliding gate valve plates, respectively. As well known in the art, the sliding translation of the sliding surface of a sliding gate valve plate relative to the sliding surface of the top sliding gate valve plate and, optionally, of the bottom sliding gate valve plate in a three-plate sliding gate valve, allows the control of the level of overlap between the through bores of the two (or three) plates.

The geometries of the receiving cradles (12) of the plate support frames must mate the geometries of the corresponding sliding gate valve plates, such that one does not move relative to the plate support frame during the sliding of one sliding surface relative to the other driven by the translation of the movable carriage. For access to the sliding gate valve plates, the plate support frame can generally be opened like a book by rotation about hinges of the bottom plate support frame (11L) relative to the top (and/or mid-) plate support frame as illustrated schematically in Figure 1(a)&(b)). A sliding gate valve plate (1) freshly laid into a corresponding receiving cradle (12) needs be fixed only to the extent that the plate does not fall off before the bottom plate support frame (11L) is rotated back into its operating position, with the sliding surfaces of the plates in sliding contact with one another. Mechanisms for holding the plates in the receiving cradles during handling are known in the art such as resilient clamps that ensure that a plate does not fall from the plate support frame during handling.

Traditionally, for removing a spent sliding gate valve plate (1) from its receiving cradle (12), in particular a top sliding gate valve plate (1t) which is generally fixed with mortar (43) to an inner nozzle (42), an operator would run an elongated tool through the through bore of the sliding gate valve plate and pull and push to remove the sliding gate valve plate from the receiving cradle (12). This operation definitely ruins the through bore of a sliding gate valve plate, which is not so important if it is to be disposed of but does not allow a refurbishing of the plate. Although the elongated tool is not handled as hardly when mounting a new sliding gate valve plate into a receiving cradle (12), there is a risk of damaging the through bore of a new sliding gate valve plate. It is clear that a robot can be configured for handling an elongated tool in a similar way as a human operator would use. To avoid possible damages to the through bore, however, the robotized system of the present invention uses gripping means for safely gripping and handling a sliding gate valve plate. The gripping means permit a sliding gate valve plate to be held by its peripheral edges (1e) and / or by its second surface (1d) and not at all by the through hole as is traditionally performed by human operators. To this effect, the gripping means require two components: (a) the robot comprises gripping clamps (25g, 25r, 25t) discussed in continuation; (b) the receiving cradle of the plate support frame comprises clearings (15) allowing access of the gripping clamps (25) to gripping holds (5) located at the peripheral edge (1e) and / or at the second surface (1d), adjacent to the peripheral edge, mating the gripping clamps (25g, 25r, 25t) of the robot, when the sliding gate valve plate is locked in the receiving plate support frame.

In an advantageous embodiment, the gripping means of the robotized system for fixing or removing a sliding gate valve plate to or from a sliding gate valve is configured such that
(a) the sliding gate valve plate comprises gripping holds (5) located at the peripheral edge (1e) and / or at the second surface (1d), adjacent to the peripheral edge, mating the gripping clamps (25g, 25r, 25t) of the robot, such that the robot can securely hold and handle the sliding gate valve plate,
(b) the gripping clamps (25g, 25r, 25t) can be moved, preferably by rotation about a rotation axis, from an open position suitable for surrounding the peripheral edge (1e) of the sliding gate valve plate to a gripping position suitable for coupling the gripping clamps (25g, 25r, 25t) to the gripping holds (5) of the sliding gate valve plate (1), and
(c) the receiving cradle of the plate support frame comprises clearings (15) allowing access of the gripping clamps (25g, 25r, 25t) to the gripping holds (5) when the sliding gate valve plate is locked in the receiving plate support frame.

### The handling interface (21) of the robot (20) and gripping clamps (25g, 25r, 25t)

The robot used in the present invention can be any robot available on the market comprising sufficient degrees of freedom, such as for example, five to seven degrees of freedom, for performing the operations of collecting a sliding gate valve plate, moving it between a storage position and a sliding gate valve, and for positioning the sliding gate valve plate into a corresponding receiving cradle (12). One essential feature of the present invention is a handling interface (21) provided at the end of an arm of the robot and equipped with gripping clamps (25g, 25r, 25t) for gripping the sliding gate valve plate. The handling interface (21) is configured for,
- collecting a new unit (1n) of the sliding gate valve plate (1) and coupling and locking it to the corresponding plate support frame (11), and/or
- unlocking and removing a spent unit of the sliding gate valve plate (1) from the corresponding plate support frame (11), and
- safely transporting a sliding gate valve plate between a storage position and the plate support frame (11).

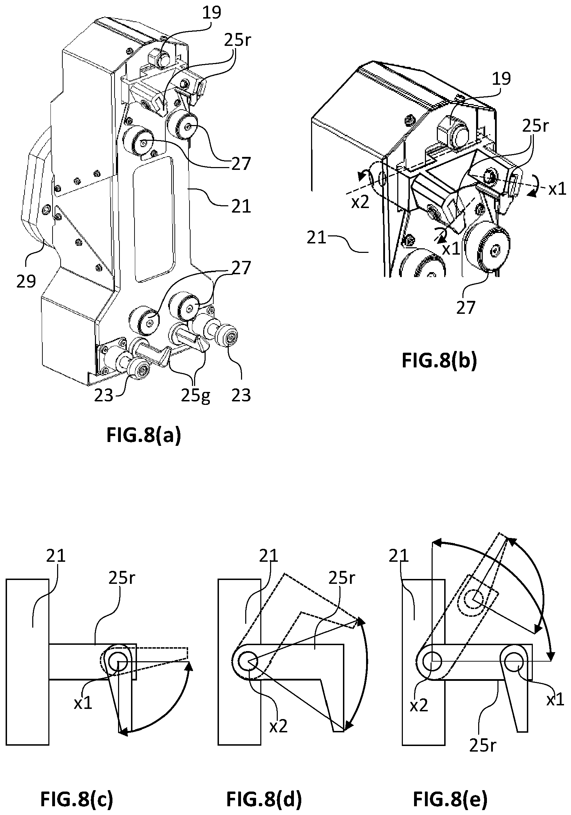

The foregoing operations can be safely carried out by means of the gripping clamps (25g, 25r, 25t) which interact with the gripping holds (5) of the sliding gate valve plates. In a preferred embodiment, the handling interface (21) of the robot comprises N = 3 or 4 gripping clamps (25g, 25r, 25t), which are L-shaped in that they comprise a first rod comprising a free end and a second rod comprising a coupled end, said first rod being movably mounted so as to move the free end from an open position suitable for surrounding the peripheral edge (1e) of the sliding gate valve plate to a gripping position, thus forming a L-shape such as illustrated in Figure 8, suitable for coupling the free end of the L-shaped gripping clamps (25g, 25r, 25t) to the gripping holds (5) of the sliding gate valve plate (1). In some embodiments, the gripping clamps (25g, 25r, 25t) comprise more than two rods. Gripping clamps can for example comprise three rods such to be finger-shaped or T-shaped, provided they are suitable for coupling to the gripping holds (5) of the slide gate valve plate (1). Alternatively, instead of a first rod with a free end, the gripping clamps can comprise a gripping head coupled to the second rod. The gripping head is then movably mounted so as to move the gripping head from an open position suitable for surrounding the peripheral edge (1e) of the sliding gate valve plate to a gripping position suitable for coupling to the gripping holds (5) of the slide gate valve plate (1).

The L-shaped gripping clamps (25g, 25r, 25t) are movable, from an open position, wherein the L-shaped gripping clamps circumscribe the peripheral edge of a sliding gate valve plate to a gripping position wherein the free ends of the L-shaped gripping clamps interact with the gripping holds (5) of the sliding gate valve plate. In the open position, the L-shaped gripping clamps match the clearings (15) of the corresponding clearings, so that the handling interface (21) can be translated along a direction normal to the sliding surface (1s) of a sliding gate valve plate driving the free ends of the L-shaped gripping clamps through the clearings (15) beyond the sliding surface of the sliding gate valve plate, in registry with the gripping holds (5) of the sliding gate valve plate. The L-shaped gripping clamps can then be moved to their gripping position, so that the free ends interact with the gripping holds (5) and the sliding gate valve plate is thus safely gripped.

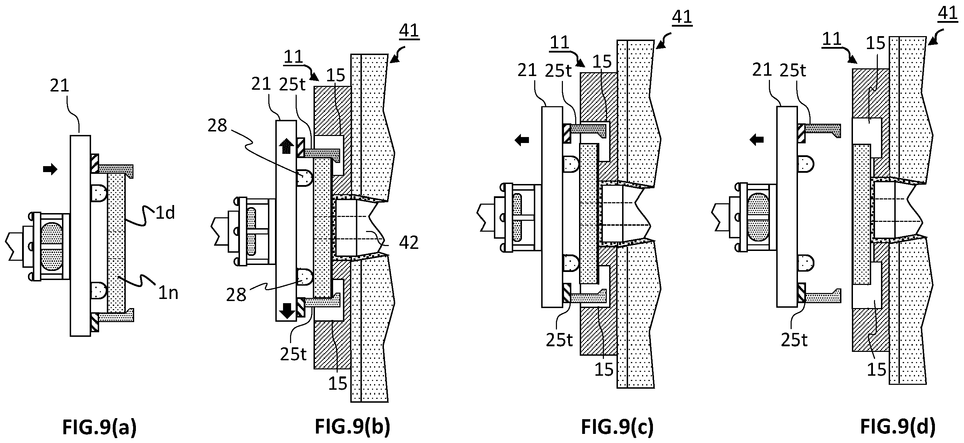

In a preferred embodiment, the handling interface (21) of the robot further comprises resilient elements (27) suitable for pressing against the sliding surface (1s) when the free ends of the L-shaped gripping clamps are in the gripping position. The resilient elements press against the sliding surface (1s) of a sliding gate valve plate away from the handling interface (21), whilst the gripping clamps retain the sliding gate valve plate, thus safely locking the plate into position between the resilient means (27) and the gripping clamps (25g, 25r, 25t) of the handling interface (21). The resilient elements can comprise mechanical springs, such as helicoidal springs or blade springs, or can be made of resilient materials, such as rubbers. Because the temperature of a sliding gate valve plate can vary greatly depending on whether it is a new plate, or a spent plate brought directly after a casting operation, it is preferred that the resilient means comprise mechanical springs. The portion of the resilient elements contacting the sliding surface (1s) of a sliding gate valve plate must be such as to avoid damaging the sliding surface by scratching. In an alternative embodiment, as illustrated in Figure 9, the handling interface (21) of the robot further comprises rigid elements (28) for pressing against the sliding surface (1s) when the free ends of the L-shaped gripping clamps are in the gripping position.

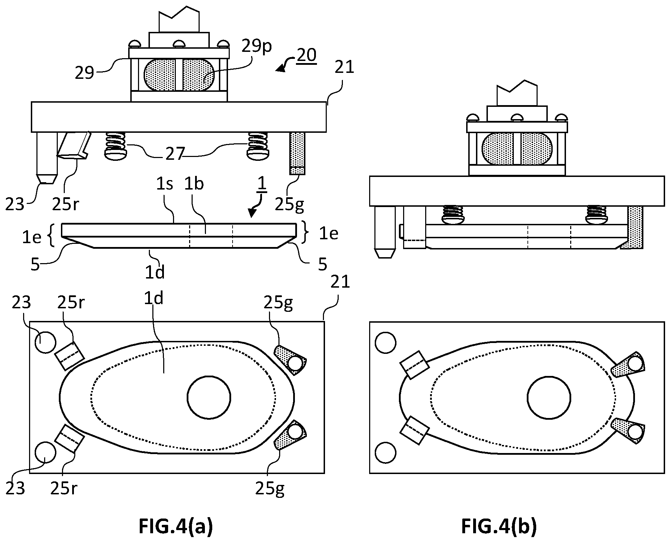

The movable L-shaped gripping clamps (25g, 25r, 25t) are preferably rotatably mounted so as to rotate between the open and gripping positions about a rotation axis. Rocking clamps (25r) rotate about a rotation axis intersecting the coupled end, and normal to both rods of the L-shaped gripping clamps including the free end and the coupled end (cf. Figures 4, 5, and 7). Rocking clamps are advantageous because they allow the application of a pulling force to a sliding gate valve plate laid in a receiving cradle (12) when rocking from the open position to the gripping position.

Gyrating clamps (25g) rotate about a rotation axis parallel to, preferably coaxial with the rod of the L comprising the coupled end (cf. Figures 4, 5, and 7). Gyrating clamps (25g) are advantageous because they require only a small clearing in the receiving cradle to reach and engage the gripping holds (5) of the sliding gate valve plate.

In an alternative embodiment, as illustrated in Figure 9, the gripping clamps (25t) are mounted so as to translate between the open and gripping positions relative to the handling interface (21). The translation advantageously comprises at least one component in a plane parallel to the sliding surface (1s).

Figure 9 (a)-(d) illustrates a method for fixing a new sliding gate valve plate (1n) to a top plate support frame (11t) of a slide gate valve comprising,
(a) providing a robotized system as discussed supra,
(b) approaching the handling interface (21) of a new unit (1n) of a top slide gate valve plate (11),
(c) engaging the gripping clamps (25t) by translation in the gripping holds (5) of the new unit (1n) thus reaching their gripping position, such that the robot securely holds and can handle the new unit (1n),
(d) driving the handling interface (21) with the new unit (1n) to the plate support frame (11t), with the gripping clamps (25t) engaged in the corresponding clearings (15),
(e) disengaging the gripping clamps (25t) by translation from the gripping holds (5),
(f) driving the handling interface (21) away from the top plate support frame (11t).

Before driving the new unit (1n) to the top plate support frame (11t), the second surface (1d) of the top slide gate valve plate (1t) is advantageously coated with mortar, such that it will adhere to the inner nozzle (42). Alternatively, the inner nozzle (42) can be coated with mortar before the new unit (1n) is driven to the plate support frame (11t), such that it will adhere to the top slide gate valve plate (1t).

When the rotating clamps are rotatably mounted, the handling interface (21) can comprise rocking clamps (25r) only (i.e., N rocking clamps), gyrating clamps only (25g) (i.e., N gyrating clamps), or both rocking and gyrating clamps (25r, 25g) (i.e., n rocking clamps and N-n gyrating clamps, with n < N). In a preferred embodiment, illustrated in Figure 4, the handling interface (21) comprises N = 4 gripping clamps, of which n = 2 are rocking clamps (25r) and N - n = 2 are gyrating clamps (25g). In an alternative embodiment, N = 3 gripping clamps, of which n = 1 are rocking clamps (25r) and N - n = 2 are gyrating clamps (25g).

A sliding gate valve plate (1) can be inscribed in a rectangle defining a length, L, and width, W, with W ≤ L of the sliding gate valve plate. It is preferred that a pair of similar gripping clamps be located side by side adjacent to a first end of the length, L, and one or a pair of similar gripping clamps be located side by side adjacent to a second end, opposite the first end of the length, L, wherein the pair of gripping clamps adjacent to the first end can be same as or different from the one or pair of gripping clamps adjacent to the second end. For example, the handling interface (21) of the robot can comprise one or two adjacent rocking clamps (25r) at a first end of the length, L, and comprises one or two adjacent gyrating clamps (25g) at a second end of the length, L.

Figure 8(a) shows a preferred embodiment of handling interface (21) comprising resilient element (27) and a pair of gyrating grips (25g) and a pair of rocking clamps (25r). As illustrated in Figure 8(b), the rocking clamps can rock over two axes of rotation, x1 and x2. Figure 8(c)&(d) show single-axis rocking clamps (25r) comprising a single axis of rotation x1 or x2. Figure 8(e) shows a dual-axes rocking clamp (25r) with two axes of rotation x1 and x2, enlarging the moving span of the rocking clamps.

A combination of rocking and gyrating gripping means can be particularly advantageous for ripping a spent top sliding gate valve plate (1t) coupled to an inner nozzle (42) by means of a mortar (43) as illustrated in the embodiment of Figure 7. In this embodiment, the handling interface (21) or the top plate support frame (11) comprises a protrusion (19) such that when the robot faces the top plate support frame to remove the top sliding gate valve plate therefrom, one or two gyrating clamps (25g) have penetrated through the corresponding clearings (15) and are rotated to their gripping position, whilst the protrusion (19) allows only partial penetration of the rocking clamps (25r) through the corresponding clearing, such that the handling interface (21) is at an angle with respect to the sliding surface (1s) of the top sliding gate valve plate (1t). The one or two rocking clamps are still in their open position (cf. Figure 7(a)&(b)). In this position, the rocking clamps (25r) are rotated to their gripping position. As shown in Figure 7(c), the rocking movement of the L-shaped rocking clamps pulls the corresponding end of the top sliding gate valve plate creating a rotational moment on the plate about an axis passing by the one or two gyrating clamps allowing disruption of the mortar (43) adhering the top sliding gate valve plate to the inner nozzle (42) by progression of a crack between mortar (43) and second surface (1d) along the length of the top sliding gate valve plate. This solution obviously requires less energy and force than pulling the top sliding gate valve plate away from the inner nozzle along a direction normal to the sliding surface (1s), which would require the whole area of the interface between mortar and top sliding gate valve plate to be disrupted simultaneously. The protrusion (19) is preferably retractable, so that it is used only for removing a spent sliding gate valve plate from the support frame (preferably top sliding gate valve plates (1t)), and it can be retracted so as to not interfere with the positioning of a new sliding gate valve plate onto a receiving cradle.

This embodiment can thus be used in a method illustrated in Figure 7 for removing a top sliding gate valve plate (1t) from a plate support structure (11) of a slide gate valve mounted at a bottom of a metallurgic vessel, comprising,
(a) providing a robotized system as discussed supra with a top sliding gate valve plate loaded in a top plate support frame (11t) and coupled to an inner nozzle (42) with mortar (43),
(b) engaging the gyrating clamps (25g) entirely into the corresponding clearings (15) and rotating the gyrating clamps to engage into the corresponding gripping holds (5) thus reaching their gripping position,
(c) engaging the rocking clamps (25r) into the corresponding clearings (15) as far as the protrusion (19) allows, and rotating the rocking clamps towards their gripping position to partially engage the rocking clamps into the corresponding gripping holds, thereby pulling one end of the top sliding gate valve plate away from the inner nozzle, and initiating a crack in the mortar until the rocking clamps are entirely engaged into the corresponding gripping holds, and reach their gripping position,
(d) removing the top sliding gate valve plate from the top plate support frame by driving the handling interface away from the top plate support frame.

The gyrating clamps (25g) can be rotated prior to or simultaneously with the rocking clamps (25r). A simultaneous rotation of the gyrating and rocking clamps allows using a single drive for driving the rotation of the two types of clamps.

One major advantage of rotatable L-shaped gripping clamps as discussed supra is that they can adapt to sliding gate valve plates of slightly varying geometries, either because the plates have a different design, or because they are at different temperatures: room temperature for a new sliding gate valve plate (1n), and substantially higher temperatures for spent sliding gate valve plates, which are thermally expanded relative to the new ones at room temperature.

### Robot (20)

Because each new metallurgic vessel (41) is not necessarily positioned at exactly the same position relative to the robot (20), It is not practical to configure the robot to repeat exactly the same movements with each new metallurgic vessel. It is therefore preferred that the robot be provided with an electromagnetic wave recognition system, such as an optical camera system with recognition of elements, infrared (e.g., Lidar), radar, etc. These systems may not have the accuracy required for the operations to be performed by the robot and, in case of an optical recognition system, fumes and vapours may disrupt visibility and the accuracy of the movements.

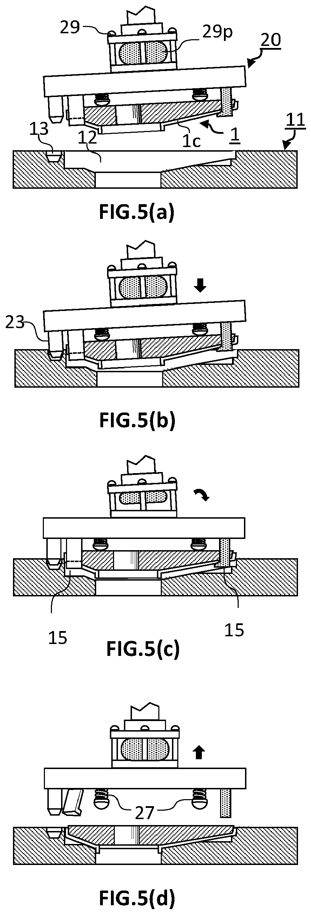

In one embodiment, illustrated in Figures 4&5, the handling interface (21) may comprise guiding pins (23) protruding beyond a plane comprising the sliding surface (1s) when a sliding gate valve plate (1) is gripped. The plate support frame (11) comprises funnel shaped cavities (13) for receiving the guiding pins and guiding the sliding gate valve plate in alignment with the receiving cradle (12). In Figures 4&5, two guiding pins are illustrated. It is clear that the handling interface can comprise two, three, or four such pins, preferably two or three. As shown in Figure 5, if the guiding pins allow a re-alignment of the handling interface (21) holding a sliding gate valve plate relative to the plate support frame, this is only made possible if the "wrist" between the arm of the robot (20) and the handling interface (21) is flexible.

It is therefore preferred as illustrated in Figures 1,5&7, to provide the robot with a coupling element (29) coupling the arm of the robot to the handling interface (21). The coupling element (29) comprises pneumatic or hydraulic system (29p) capable of controlling the compliance of the coupling element and thus the compliance or flexibility of the coupling of the handling interface (21) to the robot. Examples of coupling elements (29) are described e.g., in US2017045106 and in EP2500150. When the pneumatic or hydraulic system (29p) is under pressure, the coupling element is rigid. A rigid coupling element (29) is used during transportation of a sliding gate valve plate (1) from one point to another, as shown in Figures 5(a), 5(b), and 5(d), and 7(a) and 7(d).

When small movements of the handling interface (21) relative to the arm of the robot it is attached to are required, the pressure in the pneumatic or hydraulic system (29p) is released, the coupling element becomes compliant allowing the handling interface (21) to rotate and translate relative to the robot arm. A compliant coupling element (29) is useful when the position of the handling interface (21) relative to the support frame must be finetuned beyond the accuracy of the robot's arm (note that the plates are quite heavy, which is detrimental to the accuracy of the robot's arm). For example, as shown in Figures 5(b)&(c) as the guiding pins (23) contact the corresponding funnel shaped cavities (13), the handling interface (21) needs to realign relative to the plate support frame as the guiding pins (23) penetrate deeper into the funnel-shaped cavities (13). At this stage it is important to keep the coupling element (29) as compliant as possible to allow the handling interface to re-align as it moves further towards the plate support frame. Similarly, in Figure 7(b)&(d), the protrusion (19) forces the handling interface to tilt at an angle relative to the plate support frame (11). Here again, the coupling element (29) must be flexible by reducing the pressure in the pneumatic or hydraulic system (29p).

The robot can be mounted on a rotating basis and, to increase the span if its reach, can be mounted on rails to move between a storing position and a slide gate valve position.

### Gripping holds (5) of the sliding gate valve plates (1) and

In one embodiment illustrated in Figures 2 to 5, and 6(a)(iv), the sliding gate valve plate is a top or a bottom sliding gate valve plate, wherein the second surface (1d) has an area smaller than the sliding surface (1s) and, in a projection onto the sliding surface, the second surface is enclosed within the sliding surface, and wherein the peripheral edge (1e) and /or the second surface comprises bevelled portions forming the gripping holds (5). A sliding gate valve plate of this type is described for example in WO2017129563. Besides the advantages described in this document afforded by such geometry of the sliding gate valve plate, the bevelled portions of the peripheral edge (1e) (or of the second surface (1d)) can be taken advantage of as forming the gripping holds (5) for interacting with the gripping clamps (25g, 25t) of the handling interface (21). The bevelled portions of the sliding gate valve plate give access and a hold to the free ends of the L-shaped gripping clamps (25g, 25r, 25t).

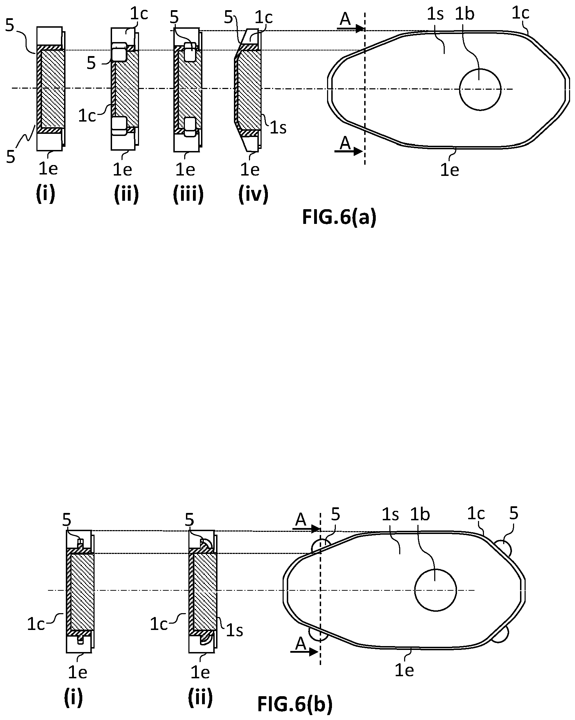

In an alternative embodiment, illustrated in Figure 6(a)(i), the second surface (1d) has substantially the same area as the sliding surface (1s). The gripping holds (5) can then be portions of the second surface (1d) of the plate (1) adjacent to the peripheral edge (1e). Such portions need to be sufficiently large to receive the gripping clamps (25g, 25r, 25t) in the gripping position, such that the robot can securely hold and handle the sliding gate valve plate (1).

In an alternative embodiment, illustrated in Figure 6(a)(ii)&(iii), the gripping holds (5) are recesses opening at the peripheral edge (1e) and penetrating in the thickness of the slide gate valve plate. If a portion of the sliding gate valve plate (1) is cladded with a metal can (1c), the recesses are at least partly formed in the metal can. The recess can open exclusively at the peripheral edge (1e) as illustrated in Figure 6(a)(iii). This embodiment id particularly suited for mid-sliding gate valve plates (1m) which comprise two opposite sliding surfaces (1s) and should preferably not comprise an opening. Alternatively, the recess can open both at the peripheral edge (1e) and second surface (1d) as illustrated in Figure 6(a)(ii). This embodiment makes it easier for the gripping clamps (25g, 25g) to engage the gripping holds (5) by simply driving the gripping clamps in open position all the way to the bottom floor of the receiving cradle, and thence move the gripping means into the gripping position, preferably by rotation, to engage into the recesses which are located at the level of the bottom floor.

In yet an alternative embodiment illustrated in Figure 6(b), the gripping holds (5) can be protrusions protruding out of the peripheral edge (1e) and are preferably part of a metal can (1c) cladding a portion of the peripheral edge. Two examples of such protruding gripping holds (5) are illustrated in Figure 6(b)(i)&(ii).

### Clearings (15) of the plate support frame (11)

As illustrated in Figure 3, the receiving cradle (12) can be nearly an imprint of the second surface (1d) of the sliding gate valve plate (1). In such configuration, the clearings (15) must be open at the periphery of the receiving cradle, at locations corresponding to the locations of the gripping clamps (25g, 25r, 25t) of the handling interface, and must be dimensioned such as to allow the passage of the gripping clamps in an open position along a direction normal to the sliding surface (1s) when a plate is held in the receiving cradle (12). The clearings (15) must also be sufficiently deep to allow the gripping clamps to reach a position facing the gripping holds so that by rotation (or other movement) they can move to the gripping position, engaging the gripping holds. The size and geometry of the clearings must be a compromise between, on the one hand, ease of access of the gripping clamps to the gripping holds and, on the other hand, the stability of the position of the sliding gate valve plate conferred by the receiving cradle upon sliding the sliding surface of one plate against the sliding surface of another plate.

When the gripping holds (5) are portions of the second surface (1d) of the plate (1) adjacent to the peripheral edge (1e), such as represented in Figure 6(a)(i), it is necessary that the clearings (15) are sufficiently deep to allow the gripping clamps (5g, 5r, 5t) to reach a position facing the second surface (1d) of the plate when the sliding gate valve plate is locked in the receiving plate support frame (11), so that they can move to the gripping position, engaging the second surface (1d).

The receiving cradle can also comprise a bottom floor and holding blocks protruding out of the bottom floor and positioned at strategic locations for holding a sliding gate valve plate in place upon actuating the sliding gate valve. With such configurations, clearing (25) are readily available and the plate support frame (11) needs not be amended to implement the robotized system of the present invention. Only the sliding gate valve plates need be provided with gripping holds (5). In case sliding gate valve plates comprising a bevelled peripheral edge as described in WO2017129563, even the plates need not be amended, and only the robot and the handling interface are required for implementing the present invention. This is a great advantage as only minimal adaptions are required.

### Advantages

The present invention is advantageous as it relieves human operators from hard labour conditions and is more reproducible with less to no risk of human error. Only minimal amendments are required in the installation to implement the invention. The clearing (15) in the receiving cradle (12) required for allowing the passage of the gripping clamps can be quite small, especially when using gyrating or rocking clamps (25g, 25r, 25t). The gripping clamps of the handling interface are quite insensitive to dimensional variations due to variations in temperature of a sliding gate valve plate. The sliding gate valve plates only need minimal redesigning, if at all, in case bevelled plates as described in WO2017129563 are used. The use of a coupling element (29) comprising pneumatic or hydraulic system (29p) gives the robot the compliance necessary for removing and loading into a receiving cradle relatively heavy sliding gate valve plates with high accuracy, thus reducing the risks of breaking any part.

### List of references

1: sliding gate valve plate
1b: through bore
1c: metal can
1d: second surface of the plate
1e : peripheral edge
1n: new unit
1t: top sliding gate valve plate
1L : bottom sliding gate valve plate
1m: mid-sliding gate valve plate
1s: sliding surface of plate
5: gripping holds
11: plate support frame
11L: bottom plate support frame
11m: mid-plate support frame
11t: top plate support frame
12: receiving cradle
13: funnel shaped cavities
15: clearing
17: piston
19: protrusion
20: robot
21: handling interface
23: guiding pins
25r: rocking clamp
25g: gyrating clamp
27: resilient element
29: coupling element; 29p: pneumatic or hydraulic system
41: metallurgic vessel
42: inner nozzle
43: mortar

## Claims

1. Robotized system for fixing or removing a sliding gate valve plate to or from a sliding gate valve, comprising:
(d) a **sliding gate valve plate** (1) comprising a sliding surface (1s) separated from a second surface (1d) by a thickness of the sliding gate valve plate and joined to one another by a peripheral edge (1e), and comprising a through bore (1b) extending normal to the sliding surface, wherein the sliding gate valve plate is selected among,
• a top sliding gate valve plate (1t),
• a bottom sliding gate valve plate (1L), and
• optionally a mid-sliding gate valve plate (1m) wherein the second surface is a second sliding surface,
(e) a metallurgic vessel (41) provided with a sliding gate valve comprising a support structure comprising a **plate support frame** (11) comprising a **receiving cradle** (12) suitable for receiving and locking the sliding gate valve plate (1), including,
• a fixed top plate support frame (11t) for receiving and locking the top sliding gate valve plate,
• a bottom plate support frame (11L) for receiving and locking the bottom sliding gate valve plate, and
• optionally a mid-plate support frame (11m) for receiving and locking the mid-sliding gate valve plate, sandwiched between the top and bottom sliding gate valve plates,
wherein
∘ the bottom plate support frame is a movable carriage suitable for sliding the sliding surface of the bottom sliding gate valve plate against and relative to the sliding surface of the top sliding gate valve plate, thus forming a two-plate sliding gate, or
∘ optionally, the mid-plate support frame is a movable carriage suitable for sliding the sliding surface and the second sliding surface of the mid-sliding gate valve plate against and relative to the sliding surfaces of the top and bottom sliding gate valve plates, respectively, thus forming a three-plate sliding gate,
for bringing into and out of registry the through bores of the top and bottom sliding gate valve plates and optionally the mid-sliding gate valve plate,
(f) a robot (20) comprising a handling interface (21) provided with gripping clamps (25g, 25r, 25t) for gripping the sliding gate valve plate, and configured for,
• collecting a new unit (1n) of the sliding gate valve plate (1) and coupling and locking it to the corresponding plate support frame (11), and/or
• unlocking and removing a spent unit of the sliding gate valve plate (1) from the corresponding plate support frame (11),
**characterized in that,**
(g) the gripping clamps (25g, 25r, 25t) can be moved from an open position suitable for surrounding the peripheral edge (1e) of the sliding gate valve plate to a gripping position suitable for coupling the gripping clamps (25g, 25r, 25t) to gripping holds (5) located at the peripheral edge (1e) and / or at the second surface (1d), adjacent to the peripheral edge (1e), of the sliding gate valve plate (1), such that the robot can securely hold and handle the sliding gate valve plate, and **in that**
(h) the receiving cradle of the plate support frame comprises clearings (15) allowing access of the gripping clamps (25g, 25r, 25t) to the gripping holds (5) when the sliding gate valve plate is locked in the receiving plate support frame.

2. Robotized system according to claim 1, wherein the sliding gate valve plate is a top or a bottom sliding gate valve plate, wherein the second surface (1d) has an area smaller than the sliding surface (1s) and, in a projection onto the sliding surface, the second surface is enclosed within the sliding surface, and wherein the peripheral edge (1e) and /or the second surface comprises bevelled portions forming the gripping holds (5).

3. Robotized system according to claim 1, wherein the gripping holds (5) comprise protrusions protruding out of the peripheral edge (1e) and are preferably part of a metal can (1c) cladding a portion of the peripheral edge (1e).

4. Robotized system according to claim 1, wherein the gripping holds (5) comprise recesses opening at the peripheral edge (1e) and penetrating in the thickness of the slide gate plate, the recesses are preferably at least partly formed in a metal can (1c) cladding a portion of the peripheral edge.

5. Robotized system according to claim 1, wherein the gripping holds (5) comprise portions of the second surface (1d) adjacent to the peripheral edge (1e), and the clearings (15) are then sufficiently deep to allow the gripping clamps (25g, 25r, 25t) to reach a position facing said portions of the second surface (1d) when the sliding gate valve plate (1) is locked in the receiving plate support frame (11), so that the gripping clamps (25g, 25r, 25t) can move to the gripping position, engaging the second surface (1d).

6. Robotized system according to anyone of the preceding claims, wherein the handling interface (21) of the robot comprises N = 3 or 4 gripping clamps (25g, 25r, 25t), which are L-shaped with a free end and a coupled end movably mounted so as to move the free end from the open position to the gripping position suitable for coupling the free end of the L-shaped gripping clamps (25g, 25r, 25t) to the gripping holds (5) of the sliding gate valve plate (1).

7. Robotized system according to claim 6, wherein the L-shaped gripping clamps are rotatably mounted so as to rotate between the open and gripping positions about a rotation axis,
• Intersecting the coupled end normal to both free end and coupled end, forming a rocking clamp (25r), or
• Coaxial with the coupled end forming a gyrating clamp (25g),
wherein a number, n, of L-shaped gripping clamps are rotatable about one of the foregoing rotation axes and the remaining (N - n) L-shaped gripping clamps are rotatable about the other of the foregoing rotation axes, with n = 1 to 4, preferably N = 4 and n = 2.

8. Robotized system according to claims 7, wherein
• The handling interface (21) of the robot comprises one or two adjacent rocking clamps (25r) and comprises one or two adjacent gyrating clamps (25g), and
• The handling interface (21) or the top plate support frame (11) comprises a protrusion (19) such that when the robot faces the top plate support frame to remove the top sliding gate valve plate therefrom, with the one or two gyrating clamps in gripping position, the robot is at an angle with respect to the sliding surface such that the one or two rocking clamps can rotate and contact the gripping holds, but cannot reach the gripping position without pulling one end of the top sliding gate valve plate which rotates about an axis passing by the one or two gyrating clamps and easily breaking mortar adhering it to the metallurgic vessel.

9. Robotized system according to anyone of claims 6 to 8, wherein the handling interface (21) of the robot further comprises resilient elements (27) suitable for pressing against the sliding surface (1s) when the free ends of the L-shaped gripping clamps are in the gripping position and thus locking the sliding gate valve plate to the handling interface (21) of the robot.

10. Robotized system according to anyone of the preceding claims, wherein
• The handling interface (21) of the robot comprises guiding pins (23) protruding beyond a plane comprising the sliding surface (1s) when a sliding gate valve plate (1) is gripped, and
• the plate support frame (11) comprises funnel shaped cavities (13) for receiving the guiding pins and guiding the sliding gate valve plate in alignment with the receiving cradle (12).

11. Robotized system according to anyone of the preceding claims, wherein the handling interface (21) is coupled to an arm of the robot by means of a coupling element (29) comprising pneumatic or hydraulic system (29p) capable of controlling the compliance of the coupling element and thus the compliance of the coupling of the handling interface (21) to the robot.

12. A method for fixing a sliding gate valve plate (1t, 1L) to or from a sliding gate valve comprising,
(a) providing a robotized system according to anyone of the preceding claims,
(b) approaching the handling interface (21) of a new unit (1n) of a slide gate valve plate (1L, 1t),
(c) engaging the gripping clamps (25t) in the gripping holds (5) of the new unit (1n) thus reaching their gripping position, such that the robot securely holds and can handle the new unit (1n),
(d) driving the handling interface (21) with the new unit (1n) to the plate support frame (11t), with the gripping clamps (25t) engaged in the corresponding clearings (15),
(e) disengaging the gripping clamps (25t) from the gripping holds (5),
(f) driving the handling interface (21) away from the plate support frame (11t).

13. A method for removing a top sliding gate valve plate (1t) from a plate support structure (11) of a slide gate valve mounted at a bottom of a metallurgic vessel, comprising,
(a) providing a robotized system according to claim 8 and to anyone of claims 9 to 11 when depending on claim 8, with a top sliding gate valve plate loaded in a top plate support frame (11t) and coupled to an inner nozzle (42) with mortar (43),
(b) engaging the gyrating clamps (25g) entirely into the corresponding clearings (15) and rotating the gyrating clamps to engage into the corresponding gripping holds (5) thus reaching their gripping position,
(c) engaging the rocking clamps (25r) into the corresponding clearings (15) as far as the protrusion (19) allows, and rotating the rocking clamps towards their gripping position to partially engage the rocking clamps into the corresponding gripping holds, thereby pulling one end of the top sliding gate valve plate away from the inner nozzle, and initiating a crack in the mortar until the rocking clamps are entirely engaged into the corresponding gripping holds, and reach their gripping position,
(d) removing the top sliding gate valve plate from the top plate support frame by driving the handling interface away from the top plate support frame.

## Patentansprüche

1. Robotersystem zum Fixieren oder Entfernen einer Gleitschieberventilplatte an oder von einem Gleitschieberventil, umfassend:
(d) eine **Gleitschieberventilplatte** (1), umfassend eine Gleitfläche (1s), die von einer zweiten Oberfläche (1d) durch eine Dicke der Gleitschieberventilplatte getrennt ist und die miteinander durch eine Umfangskante (1e) verbunden sind, und umfassend eine Durchgangsbohrung (1b), die sich normal zu der Gleitfläche erstreckt, wobei die Gleitschieberventilplatte ausgewählt ist aus,
• einer oberen Gleitschieberventilplatte (1t),
• einer unteren Gleitschieberventilplatte (1L) und
• optional einer mittleren Gleitschieberventilplatte (1m), wobei die zweite Oberfläche eine zweite Gleitfläche ist,
(e) ein metallurgisches Gefäß (41), das mit einem Gleitschieberventil versehen ist, umfassend eine Trägerstruktur, die einen Plattenträgerrahmen (11) umfasst, umfassend eine Aufnahmegabel (12), die zum Aufnehmen und Verriegeln der Gleitschieberventilplatte (1) geeignet ist, beinhaltend,
• einen fixierten oberen Plattenträgerrahmen (11t) zum Aufnehmen und Verriegeln der oberen Gleitschieberventilplatte,
• einen unteren Plattenträgerrahmen (11L) zum Aufnehmen und Verriegeln der unteren Gleitschieberventilplatte und
• optional einen mittleren Plattenträgerrahmen (11m) zum Aufnehmen und Verriegeln der mittleren Gleitschieberventilplatte, die zwischen der oberen und unteren Gleitschieberventilplatte liegt,
wobei
o der untere Plattenträgerrahmen ein beweglicher Schlitten ist, der geeignet ist, die Gleitfläche der unteren Gleitschieberventilplatte gegen die und relativ zu der Gleitfläche der oberen Gleitschieberventilplatte gleiten zu lassen, wodurch ein Zwei-Platten-Gleitschieber gebildet wird, oder
o optional der mittlere Plattenträgerrahmen ein beweglicher Schlitten ist, der geeignet ist, die Gleitfläche und die zweite Gleitfläche der mittleren Gleitschieberventilplatte gegen die und relativ zu der Gleitfläche der oberen bzw. der unteren Gleitschieberventilplatte gleiten zu lassen, wodurch ein Drei-Platten-Gleitschieber gebildet wird,
um die Durchgangsbohrungen der oberen und unteren Gleitschieberventilplatte und optional die mittlere Gleitschieberventilplatte in und aus Ausrichtung zu bringen,
(f) einen Roboter (20), umfassend eine Hantierfläche (21), die mit Greifklemmen (25g, 25r, 25t) zum Greifen der Gleitschieberventilplatte versehen ist, und ausgelegt zum,
• Einholen einer neuen Einheit (1n) der Gleitschieberventilplatte (1) und Befestigen und Verriegeln derselben an den entsprechenden Plattenträgerrahmen (11) und/oder
• Entriegeln und Entfernen einer verbrauchten Einheit der Gleitschieberventilplatte (1) von dem entsprechenden Plattenträgerrahmen (11),
**dadurch gekennzeichnet, dass**
(g) die Greifklemmen (25g, 25r, 25t) von einer offenen Position, die geeignet ist, die Umfangskante (1e) der Gleitschieberventilplatte zu umgeben, zu einer Greifposition bewegt werden können, die zum Befestigen der Greifklemmen (25g, 25r, 25t) an Griffhalterungen (5) geeignet ist, die sich an der Umfangskante (1e) und/oder an der zweiten Oberfläche (1d) neben der Umfangskante (1e) der Gleitschieberventilplatte (1) befinden, so dass der Roboter die Gleitschieberventilplatte sicher halten und hantieren kann, und **dadurch, dass**
(h) die Aufnahmegabel des Plattenträgerrahmens Ausnehmungen (15) umfasst, die Zugang der Greifklemmen (25g, 25r, 25t) zu den Griffhalterungen (5) ermöglichen, wenn die Gleitschieberventilplatte in dem aufnehmenden Plattenträgerrahmen verriegelt wird.

2. Robotersystem nach Anspruch 1, wobei die Gleitschieberventilplatte eine obere oder eine untere Gleitschieberventilplatte ist, wobei die zweite Oberfläche (1d) eine Fläche aufweist, die kleiner als die Gleitfläche (1s) ist und in einer Projektion auf die Gleitfläche die zweite Oberfläche in der Gleitfläche eingeschlossen ist und wobei die Umfangskante (1e) und/oder die zweite Oberfläche abgeschrägte Abschnitte umfassen, die die Griffhalterungen (5) bilden.

3. Robotersystem nach Anspruch 1, wobei die Griffhalterungen (5) Fortsätze umfassen, die aus der Umfangskante (1e) vorstehen und vorzugsweise Teil einer Metallhülse (1c) sind, die einen Abschnitt der Umfangskante (1e) verkleidet.

4. Robotersystem nach Anspruch 1, wobei die Griffhalterungen (5) Vertiefungen umfassen, die sich an der Umfangskante (1e) öffnen und in die Dicke der Gleitschieberplatte eindringen, wobei die Vertiefungen vorzugsweise mindestens teilweise in einer Metallhülse (1c) gebildet sind, die einen Abschnitt der Umfangskante verkleidet.

5. Robotersystem nach Anspruch 1, wobei die Griffhalterungen (5) Abschnitte der zweiten Oberfläche (1d) neben der Umfangskante (1e) umfassen und die Ausnehmungen (15) dann ausreichend tief sind, um den Greifklemmen (25g, 25r, 25t) zu erlauben, eine Position zu erreichen, die den Abschnitten der zweiten Oberfläche (1d) zugewandt ist, wenn die Gleitschieberventilplatte (1) in dem aufnehmenden Plattenträgerrahmen (11) verriegelt wird, so dass sich die Greifklemmen (25g, 25r, 25t) zu der Greifposition bewegen können, wo sie mit der zweiten Oberfläche (1d) in Eingriff gelangen.

6. Robotersystem nach einem der vorstehenden Ansprüche, wobei die Hantierfläche (21) des Roboters N = 3 oder 4 Greifklemmen (25g, 25r, 25t) umfasst, die L-förmig sind, mit einem freien Ende und einem befestigten Ende, das beweglich montiert ist, um das freie Ende von der offenen Position zu der Greifposition zu bewegen, die zum Befestigen des freien Endes der L-förmigen Greifklemmen (25g, 25r, 25t) an den Griffhalterungen (5) der Gleitschieberventilplatte (1) geeignet ist.

7. Robotersystem nach Anspruch 6, wobei die L-förmigen Greifklemmen drehbar montiert sind, um zwischen der offenen und Greifposition um eine Drehachse zu drehen,
• die das befestigte Ende normal zu sowohl dem freien Ende als auch dem befestigten Ende schneidet, wodurch eine schwenkende Klemme (25r) gebildet wird, oder
• die koaxial mit dem befestigten Ende ist, wodurch eine kreisende Klemme (25g) gebildet wird,
wobei eine Anzahl, n, von L-förmigen Greifklemmen um eine der zuvor genannten Drehachsen drehbar ist und die verbleibenden (N - n) L-förmigen Greifklemmen um die andere der zuvor genannten Drehachsen drehbar ist, wobei n = 1 bis 4, vorzugsweise N = 4 und n = 2 ist.

8. Robotersystem nach Anspruchs 7, wobei
• die Hantierfläche (21) des Roboters eine oder zwei nebeneinander liegende schwenkende Klemmen (25r) umfasst und eine oder zwei nebeneinander liegende kreisende Klemmen (25g) umfasst und
• die Hantierfläche (21) oder der obere Plattenträgerrahmen (11) einen Fortsatz (19) umfasst, so dass, wenn der Roboter dem oberen Plattenträgerrahmen zugewandt ist, um die obere Gleitschieberventilplatte von diesem zu entfernen, wobei die eine oder zwei kreisenden Klemmen in Greifposition sind, der Roboter in einem Winkel in Bezug auf die Gleitfläche liegt, so dass die eine oder zwei schwenkenden Klemmen drehen und mit den Griffhalterungen in Kontakt gelangen können, aber die Greifposition nicht erreichen können, ohne an einem Ende der oberen Gleitschieberventilplatte zu ziehen, das um eine Achse dreht, die durch die eine oder zwei kreisenden Klemmen geht, und leicht den Mörtel zu brechen, der sie an das metallurgische Gefäß heftet.

9. Robotersystem nach einem der Ansprüche 6 bis 8, wobei die Hantierfläche (21) des Roboters weiter elastische Elemente (27) umfasst, die geeignet sind, gegen die Gleitfläche (1s) zu pressen, wenn die freien Enden der L-förmigen Greifklemmen in der Greifposition sind, und somit die Gleitschieberventilplatte an der Hantierfläche (21) des Roboters verriegeln.

10. Robotersystem nach einem der vorstehenden Ansprüche, wobei
• die Hantierfläche (21) des Roboters Führungsstifte (23) umfasst, die über eine Ebene vorstehen, die die Gleitfläche (1s) umfasst, wenn eine Gleitschieberventilplatte (1) gegriffen ist, und
• der Plattenträgerrahmen (11) trichterförmige Hohlräume (13) zum Aufnehmen der Führungsstifte und Führen der Gleitschieberventilplatte in Ausrichtung mit der Aufnahmegabel (12) umfasst.

11. Robotersystem nach einem der vorstehenden Ansprüche, wobei die Hantierfläche (21) an einen Arm des Roboters mittels eines Befestigungselements (29) befestigt ist, das ein pneumatisches oder hydraulisches System (29p) umfasst, das imstande ist, die Nachgiebigkeit des Befestigungselements und somit die Nachgiebigkeit der Befestigung der Hantierfläche (21) an dem Roboter zu steuern.

12. Verfahren zum Fixieren einer Gleitschieberventilplatte (1t, 1L) an oder von einem Gleitschieberventil, umfassend,
(a) Vorsehen eines Robotersystems nach einem der vorstehenden Ansprüche,
(b) Annähern der Hantierfläche (21) einer neuen Einheit (1n) einer Gleitschieberventilplatte (1L, 1t),
(c) In-Eingriff-Bringen der Greifklemmen (25t) in den Griffhalterungen (5) der neuen Einheit (1n), wodurch deren Greifposition erreicht wird, so dass der Roboter die neue Einheit (1n) sicher halten und hantieren kann,
(d) Antreiben der Hantierfläche (21) mit der neuen Einheit (1n) zu dem Plattenträgerrahmen (11t), während die Greifklemmen (25t) in die entsprechenden Ausnehmungen (15) eingreifen,
(e) Lösen des Eingriffs der Greifklemmen (25t) von den Griffhalterungen (5),
(f) Antreiben der Hantierfläche (21) weg von dem Plattenträgerrahmen (11t).

13. Verfahren zum Entfernen einer oberen Gleitschieberventilplatte (1t) von einer Plattenträgerstruktur (11) eines Gleitschieberventils, die an einem Boden eines metallurgischen Gefäßes montiert ist, umfassend,
(a) Versehen eines Robotersystems nach Anspruch 8 und einem der Ansprüche 9 bis 11, wenn von Anspruch 8 abhängig, mit einer oberen Gleitschieberventilplatte, die in einen oberen Plattenträgerrahmen (11t) geladen ist und mit Mörtel (43) an einer Innendüse (42) befestigt ist,
(b) vollständiges In-Eingriff-Bringen der kreisenden Klemmen (25g) mit den entsprechenden Ausnehmungen (15) und Drehen der kreisenden Klemmen, um in die entsprechenden Griffhalterungen (5) einzugreifen, wodurch deren Greifposition erreicht wird,
(c) In-Eingriff-Bringen der schwenkenden Klemmen (25r) mit den entsprechenden Ausnehmungen (15) soweit dies der Fortsatz (19) erlaubt, und Drehen der schwenkenden Klemmen zu ihrer Greifposition, um die schwenkenden Klemmen teilweise in den entsprechenden Griffhalterungen in Eingriff zu bringen, wodurch ein Ende der oberen Gleitschieberventilplatte von der Innendüse weggezogen wird, und Erzeugen eines Risses in dem Mörtel, bis die schwenkenden Klemmen vollständig in den entsprechenden Griffhalterungen in Eingriff sind und ihre Greifposition erreichen,
(d) Entfernen der oberen Gleitschieberventilplatte von dem oberen Plattenträgerrahmen durch Antreiben der Hantierfläche weg von dem oberen Plattenträgerrahmen.

## Revendications

1. Système robotisé pour la fixation ou le retrait d'une plaque de tiroir coulissant sur ou à partir d'un tiroir coulissant, comprenant :
(d) une plaque de tiroir coulissant (1) comprenant une surface de glissement (1s) séparée d'une seconde surface (1d) par une épaisseur de la plaque de tiroir coulissant et reliées l'une à l'autre par un bord périphérique (1e), et comprenant un alésage traversant (1b) s'étendant perpendiculairement à la surface de glissement, dans lequel la plaque de tiroir coulissant est choisie parmi,
• une plaque de tiroir coulissant supérieure (1t),
• une plaque de tiroir coulissant inférieure (1L), et
• optionnellement, une plaque de tiroir coulissant médiane (1m) dans laquelle la seconde surface est une seconde surface de glissement,
(e) un récipient métallurgique (41) équipé d'un tiroir coulissant comprenant une structure de support comprenant un cadre de support de plaque (11) comprenant un socle de réception (12) apte à recevoir et à verrouiller la plaque de tiroir coulissant (1), incluant,
• un cadre fixe de support de la plaque supérieure (11t) pour recevoir et verrouiller la plaque de tiroir coulissant supérieure,
• un cadre de support de la plaque inférieure (11 L) pour recevoir et verrouiller la plaque de tiroir coulissant inférieure, et
• optionnellement, un cadre de support de plaque médiane (11m) pour recevoir et verrouiller la plaque médiane du tiroir coulissant, prise en sandwich entre les plaques de tiroir coulissant supérieure et inférieure.
dans lequel
∘ le cadre de support de la plaque inférieure est un chariot mobile apte à faire glisser la surface de glissement de la plaque inférieure du tiroir coulissant contre et par rapport à la surface de glissement de la plaque supérieure du tiroir coulissant, formant ainsi un tiroir coulissant à deux plaques, ou
∘ optionnellement, le cadre de support de la plaque médiane est un chariot mobile permettant de faire glisser la surface de glissement et la seconde surface de glissement de la plaque de tiroir médiane contre et par rapport aux surfaces de glissement des plaques de tiroir supérieure et inférieure, respectivement, formant ainsi un tiroir coulissant à trois plaques,
pour faire coïncider ou non les alésages traversants des plaques supérieure et inférieure du tiroir coulissant et, éventuellement, de la plaque médiane du tiroir coulissant,
(f) un robot (20) comprenant une interface de manipulation (21) équipée de pinces de saisie (25g, 25r, 25t) pour saisir la plaque de tiroir coulissant, et configuré pour,
• recueillir une nouvelle unité (1n) de plaque de tiroir coulissant (1), l'accoupler et la verrouiller au cadre de support de plaque correspondant (11), et/ou
• déverrouiller et retirer une unité usée de plaque de tiroir coulissant (1) du cadre de support de la plaque correspondante (11),
**caractérisé en ce que**,
(g) les pinces de saisie (25g, 25r, 25t) peuvent être déplacées d'une position ouverte adaptée pour entourer le bord périphérique (1e) de la plaque de tiroir coulissant à une position de saisie adaptée pour coupler les pinces de saisie (25g, 25r, 25t) à des prises de saisie (5) situées sur le bord périphérique (1e) et/ou sur la seconde surface (1d), adjacente au bord périphérique (1e), de la plaque de tiroir coulissant (1), de sorte que le robot puisse tenir et manipuler en toute sécurité la plaque de tiroir coulissant, et **en ce que**
(h) le berceau de réception du cadre de support de plaque comprend des ouvertures (15) permettant l'accès des pinces de saisie (25g, 25r, 25t) aux prises de saisie (5) quand la plaque de tiroir coulissant est verrouillée dans le cadre de support de plaque de réception.

2. Système robotisé selon la revendication 1, dans lequel la plaque de tiroir coulissant est une plaque de tiroir coulissant supérieure ou inférieure, dans lequel la deuxième surface (1d) a une surface plus petite que la surface coulissante (1s) et, dans une projection sur la surface coulissante, la deuxième surface est incluse dans la surface coulissante, et dans lequel le bord périphérique (1e) et/ou la deuxième surface comprend des parties biseautées formant les prises de saisie (5).

3. Système robotisé selon la revendication 1, dans lequel les prises de saisie (5) comprennent des saillies dépassant du bord périphérique (1e) et font de préférence partie d'une boîte métallique (1c) recouvrant une partie du bord périphérique (1e).

4. Système robotisé selon la revendication 1, dans lequel les prises de saisie (5) comprennent des renfoncements s'ouvrant sur le bord périphérique (1e) et pénétrant dans l'épaisseur de la plaque de la porte coulissante, les renfoncements étant de préférence au moins partiellement formés dans une boîte métallique (1c) recouvrant une partie du bord périphérique.

5. Système robotisé selon la revendication 1, dans lequel les prises de saisie (5) comprennent des parties de la deuxième surface (1d) adjacentes au bord périphérique (1e), et les dégagements (15) sont alors suffisamment profonds pour permettre aux pinces de saisie (25g, 25r, 25t) d'atteindre une position faisant face à ces parties de la seconde surface (1d) quand la plaque de tiroir coulissant (1) est verrouillée dans le cadre de support de plaque de réception (11), de sorte que les pinces de saisie (25g, 25r, 25t) puissent se déplacer vers la position de saisie, en engageant la seconde surface (1d).

6. Système robotisé selon l'une quelconque des revendications précédentes, dans lequel l'interface de manipulation (21) du robot comprend N = 3 ou 4 pinces de saisie (25g, 25r, 25t), qui sont en forme de L avec une extrémité libre et une extrémité couplée montée de manière mobile de façon à déplacer l'extrémité libre de la position ouverte à la position de saisie appropriée pour coupler l'extrémité libre des pinces de saisie en forme de L (25g, 25r, 25t) aux prises de saisie (5) de la plaque de tiroir coulissant (1).

7. Système robotisé selon la revendication 6, dans lequel les pinces de saisie en forme de L sont montées de façon rotatives de manière à tourner entre les positions d'ouverture et de saisie autour d'un axe de rotation,
• En intersectant l'extrémité couplée perpendiculaire à la fois à l'extrémité libre et à l'extrémité couplée, formant une pince à bascule (25r), ou
• Coaxialement avec l'extrémité couplée formant une pince giratoire (25g),
dans lequel un certain nombre, n, de pinces de saisie en forme de L sont rotatives autour de l'un des axes de rotation susmentionnés et les pinces de saisie en forme de L restantes (N - n) sont rotatives autour de l'autre axe de rotation susmentionné, avec n = 1 à 4, de préférence N = 4 et n = 2.

8. Système robotisé selon la revendication 7, dans lequel
• L'interface de manipulation (21) du robot comprend une ou deux pinces basculantes adjacentes (25r) et comprend une ou deux pinces tournantes adjacentes (25g), et
• L'interface de manipulation (21) ou le cadre de support de la plaque supérieure (11) comprend une saillie (19) telle que lorsque le robot fait face au cadre de support de la plaque supérieure pour en retirer la plaque de tiroir coulissant supérieure, avec une ou deux pinces tournantes en position de saisie, le robot se trouve à un angle par rapport à la surface de glissement tel que la ou les deux pinces basculantes peuvent tourner et entrer en contact avec les prises de saisie, mais ne peuvent pas atteindre la position de saisie sans tirer une extrémité de la plaque de tiroir coulissant supérieure qui tourne autour d'un axe passant par la ou les deux pinces tournantes et brisant facilement le mortier qui l'adhère au récipient métallurgique.

9. Système robotisé selon l'une des revendications 6 à 8, dans lequel l'interface de manipulation (21) du robot comprend en outre des éléments élastiques (27) aptes à appuyer sur la surface coulissante (1s) quand les extrémités libres des pinces de saisie en forme de L sont en position de saisie et verrouillent ainsi la plaque de tiroir coulissant à l'interface de manipulation (21) du robot.

10. Système robotisé selon l'une des revendications précédentes, dans lequel
• L'interface de manipulation (21) du robot comprend des broches de guidage (23) dépassant d'un plan comprenant la surface de glissement (1s) quand une plaque de tiroir coulissant (1) est saisie, et
• le cadre de support de plaque (11) comprend des cavités en forme d'entonnoir (13) pour recevoir les goupilles de guidage et guider la plaque de tiroir coulissant dans l'alignement du berceau de réception (12).

11. Système robotisé selon l'une quelconque des revendications précédentes, dans lequel l'interface de manipulation (21) est couplée à un bras du robot au moyen d'un élément de couplage (29) comprenant un système pneumatique ou hydraulique (29p) capable de contrôler la compliance de l'élément de couplage et donc la compliance du couplage de l'interface de manipulation (21) au robot.

12. Une méthode de fixation d'une plaque de tiroir coulissant (1t, 1L) sur ou à partir d'un tiroir coulissant comprenant,
(a) la fourniture d'un système robotisé selon l'une des revendications précédentes,
(b) l'approche de l'interface de manipulation (21) d'une nouvelle unité (1n) d'une plaque de tiroir coulissant (1L, 1t),
(c) l'engagement de pinces de saisie (25t) dans les prises de saisie (5) de la nouvelle unité (1n), atteignant ainsi leur position de saisie, de telle sorte que le robot tienne et puisse manipuler en toute sécurité la nouvelle unité (1n),
(d) la conduction de l'interface de manipulation (21) avec la nouvelle unité (1n) vers le cadre de support de la plaque (11t), avec les pinces de saisie (25t) engagées dans les ouvertures correspondantes (15),
(e) le désengagement des pinces de saisie (25t) des prises de saisie (5),
(f) l'éloignement de l'interface de manipulation (21) du cadre de support de la plaque (11t).

13. Une méthode de retrait d'une plaque de tiroir coulissant supérieure (1t) d'un support de plaque (11) d'un tiroir coulissant monté au fond d'une cuve métallurgique, comprenant,
(a) la fourniture d'un système robotisé selon la revendication 8 et l'une quelconque des revendications 9 à 11 quand elles dépendent de la revendication 8, avec une plaque de tiroir coulissant supérieure chargée dans un cadre de support de plaque supérieur (11t) et couplée à une buse intérieure (42) avec du mortier (43),
(b) l'engagement de pinces tournantes (25g) entièrement dans les ouvertures correspondantes (15) et en faisant tourner les pinces tournantes pour qu'elles s'engagent dans les prises de saisie correspondantes (5) et ainsi atteindre leur position de saisie,
(c) l'engagement de pinces basculantes (25r) dans les ouvertures correspondantes (15) aussi loin que la saillie (19) le permet, et faire tourner les pinces basculantes vers leur position de saisie pour engager partiellement les pinces basculantes dans les prises de saisie correspondantes, éloignant ainsi une extrémité de la plaque de tiroir coulissant supérieure de la buse intérieure, et initiant une fissure dans le mortier jusqu'à ce que les pinces basculantes soient entièrement engagées dans les prises de saisie correspondantes, et atteignent leur position de saisie,
(d) le retrait de la plaque supérieure du tiroir coulissant du cadre de support de la plaque supérieure en éloignant l'interface de manipulation du cadre de support de la plaque supérieure.
